# FASCICULE DE BREVET EUROPEEN

(11) **EP 3 399 156 B1**
(45) Date de publication et mention de la délivrance du brevet: **22.09.2021**
(21) Numéro de dépôt: 18170301.8
(22) Date de dépôt: 02.05.2018
(51) Int. Cl.: F01D 17/08, F01D 17/02, F04D 29/54

(54) **COMPRESSEUR DE TURBOMACHINE AVEC CAPTEUR DE TURBULENCES**
VERDICHTER EINER TURBOMASCHINE MIT TURBULENZ-SENSOR
TURBINE ENGINE COMPRESSOR WITH TURBULENCE SENSOR

(30) Priorité: 05.05.2017 BE 201705316
(43) Date de publication de la demande: 07.11.2018
(73) Titulaire: Safran Aero Boosters SA, 4041 Herstal (BE)
(72) Inventeur: HIERNAUX, Stéphane, 4680 Oupeye (BE)
(74) Mandataire: Lecomte & Partners

(56) Documents cités:
- GB-A- 2 452 026
- US-A1- 2012 141 251
- US-A1- 2014 182 292
- KERN ET AL: "Design of an Additive Manufactured Compressor Vane with Multi-Hole Pressure Probes for the Application in a Twin-Spool Turbofan Engine", 52ND AIAA/SAE/ASEE JOINT PROPULSION CONFERENCE 2016 : SALT LAKE CITY, UTAH, USA, 25-27 JULY 2016 : HELD AT THE AIAA PROPULSION AND ENERGY FORUM 2016,, 1 janvier 2016 (2016-01-01), pages 353-364, XP009507458, DOI: 10.2514/6.2016-4508 ISBN: 978-1-5108-3311-1

## Description

### Domaine technique

L'invention se rapporte au domaine de l'analyse du fonctionnement d'un compresseur de turbomachine. Plus précisément, l'invention concerne un compresseur de turbomachine avec un système de mesure de turbulences à plusieurs orifices isolés. L'invention a également trait à une turbomachine axiale, notamment un turboréacteur d'avion ou un turbopropulseur d'aéronef.

### Technique antérieure

Dans un turboréacteur, le niveau des turbulences en entrée de compresseur influe sur la stabilité de ce dernier. Par ailleurs, le fonctionnement de la soufflante crée et amplifie les turbulences entrant dans le compresseur. En particulier, les passages des pales de soufflante entrainent dans leurs sillons des hétérogénéités rentrant dans le compresseur. Dès lors, pouvoir mesurer ces turbulences permet d'estimer les marges de sécurité de fonctionnement du compresseur, et donc de prévoir des cas critiques.

Le document US 2004/0159103 A1 divulgue un système pour déterminer les instabilités dans un compresseur de turboréacteur. Le système comporte un transducteur de pression avec un orifice amont mesurant la pression totale, et au moins quatre orifices de mesure de pression statique. Par ailleurs, ces quatre orifices sont reliés à une même ligne commune. De plus, ils sont disposés autour d'une portion tubulaire creuse, en amont. Toutefois, la pertinence de ce système reste limitée dans le contexte du compresseur.

Le document US 2012/0141251 A1 décrit un compresseur pour turbomachine, muni de plusieurs capteurs visant à déterminer si le point de fonctionnement du compresseur est dans une zone qualifiée d'aérodynamiquement instable. Les capteurs sont répartis à différents endroits axialement espacés ce qui rend l'intégration de ce système complexe dans le compresseur, notamment du fait des câblages et de la construction des logements qui accueillent ces capteurs.

L'article "Design of an Additive Manufactured Compressor Vane with Multi-Hole Pressure Probes for the Application in a Twin-Spool Turbofan Engine" (52nd AIAA/SAE/ ASEE Joint Propulsion Conférence 2016, pages 353 à 364, ISBN: 978-1-5108-3311-1) divulgue un autre compresseur selon l'art antérieur.

### Résumé de l'invention

### Problème technique

L'invention a pour objectif de résoudre au moins un des problèmes posés par l'art antérieur. Plus précisément, l'invention a pour objectif d'améliorer le contrôle de stabilité d'un compresseur. L'invention a également pour objectif de proposer une solution simple, résistante, légère, économique, fiable, facile à produire, commode d'entretien, d'inspection aisée, et améliorant le rendement.

### Solution technique

L'invention a pour objet un compresseur selon la revendication 1 et une turbomachine selon la revendication 15.

Selon des modes avantageux de l'invention, le système de mesure des turbulences du compresseur peut comprendre une ou plusieurs des caractéristiques suivantes, prises isolément ou selon toutes les combinaisons techniques possibles :
- Les au moins deux composantes d'orientation de la vitesse de l'écoulement comprennent une composante axiale, et/ou une composante radiale, et/ou une composante circonférentielle.
- Le premier logement, le premier capteur et la première entrée sont configurés pour pouvoir mesurer la pression totale du flux.
- Le deuxième logement, le deuxième capteur et la deuxième entrée sont configurés pour pouvoir mesurer la pression statique du flux gazeux.
- Le système comprend en outre un troisième logement avec un troisième capteur de pression et une troisième entrée, les entrées étant inclinées les unes par rapport aux autres.
- Les entrées comprennent des tubes, lesdits tubes étant inclinés l'un par rapport à l'autre ou les uns par rapport aux autres.
- Le système comprend en outre une pluralité de deuxièmes logements, chacun avec un deuxième capteur de pression et une deuxième entrée, chaque entrée étant inclinée par rapport aux autres entrées.
- Les deuxièmes logements sont répartis autour du premier logement.
- Le système/qu'il comprend en outre un corps monobloc dans lequel sont formés les logements et les entrées, et dans lequel les capteurs sont logés.
- Les logements sont borgnes et/ou séparés les uns des autres de manière étanche, notamment par le corps.
- Le système est configuré pour mesurer un niveau de perturbation en fonction des variations des composantes d'orientation de la vitesse du flux.

Selon d'autres modes avantageux de l'invention, le compresseur peut comprendre une ou plusieurs des caractéristiques suivantes, prises isolément ou selon toutes les combinaisons techniques possibles :
- Les capteurs de pression sont des capteurs électriques, et/ou le capteur de température est un capteur électrique.
- Les aubes comprennent des bords d'attaque, les entrées des logements étant disposées axialement au niveau des bords d'attaque.
- Les entrées des logements sont réparties radialement le long d'un même bord d'attaque d'aube afin d'y mesurer les au moins deux composantes de vitesse d'écoulement.
- Le compresseur comprend une virole interne liée aux aubes, les entrées de logement étant disposées radialement à hauteur de la virole.

L'invention a également pour objet une turbomachine, notamment un turboréacteur, comprenant un compresseur, remarquable en ce que le compresseur est conforme à l'invention.

Selon un mode avantageux de l'invention, la turbomachine comprend une soufflante amont en regard axialement de chaque ou de plusieurs ou d'au moins une entrée de logement.

De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description, qui en plus sont combinables entre eux, selon toutes les combinaisons techniques possibles dans le périmètre des revendications.

### Avantages apportés

L'invention permet une mesure fine de la vitesse d'écoulement selon deux ou trois directions de la turbomachine. Grâce à la rapidité de mesure des capteurs, il devient possible d'estimer les fluctuations d'orientation du flux, tout en connaissant selon quelles directions les fluctuations évoluent. Ainsi, le flux primaire rentrant dans le compresseur est mieux connu. Les méthodes correctives du pompage et du décrochage peuvent être mises en œuvre plus rapidement, et plus précisément.

### Brève description des dessins

La figure 1 représente une turbomachine axiale selon l'invention.
La figure 2 est un schéma d'un compresseur de turbomachine selon l'invention.
La figure 3 illustre un système de mesure de turbulences selon l'invention.
La figure 4 montre un corps de système de mesure selon l'invention.
La figure 5 est une coupe du système de mesure suivant l'axe 5-5 tracé sur la figure 4.

### Description des modes de réalisation

Dans la description qui va suivre, les termes « interne » et « externe » renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine.

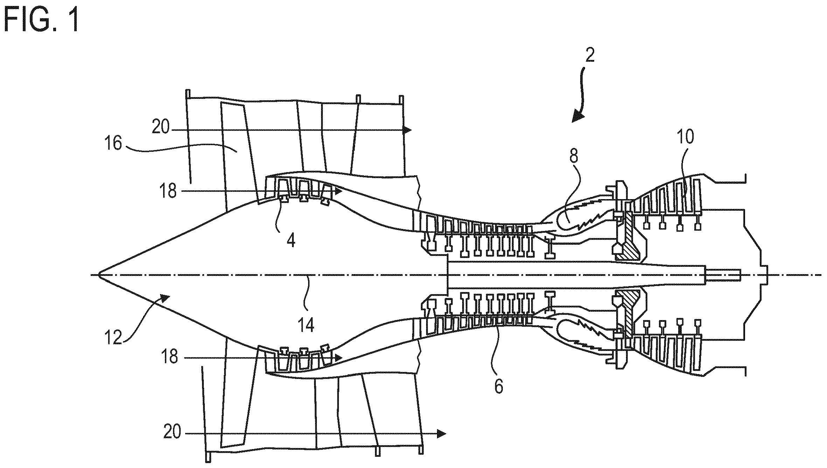

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stator. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et en un flux secondaire 20 traversant un conduit annulaire (partiellement représenté) le long de la machine pour ensuite rejoindre le flux primaire en sortie de turbine. La soufflante 16 peut présenter un diamètre supérieure ou égal à : 2,00m, ou 2,50m ou 3,00m. Elle peut comprendre de quinze à trente pales. Une démultiplication peut être accouplée à la soufflante 16.

Le flux secondaire 20 peut être accéléré de sorte à générer une réaction de poussée, essentiellement utile au vol d'un avion à réaction. Les flux primaire 18 et secondaire 20 sont des flux annulaires coaxiaux et emmanchés l'un dans l'autre. Ils sont canalisés par le carter de la turbomachine et/ou des viroles.

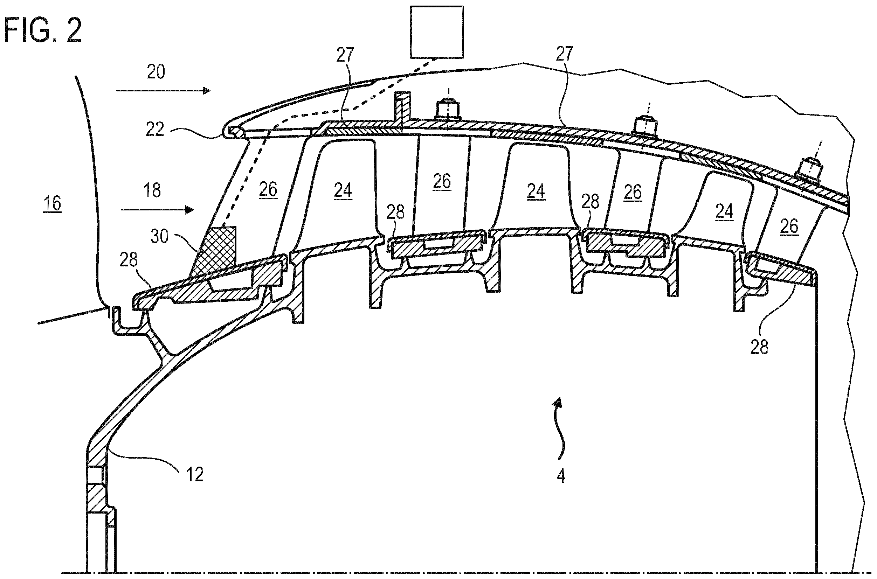

La figure 2 est une vue en coupe d'un compresseur d'une turbomachine axiale telle que celle de la figure 1. Le compresseur peut être un compresseur basse-pression 4. On peut y observer une partie de la soufflante 16 et le bec de séparation 22 du flux primaire 18 et du flux secondaire 20. Le rotor 12 comprend plusieurs rangées d'aubes rotoriques 24, en l'occurrence trois.

Le compresseur basse pression 4 comprend plusieurs redresseurs, en l'occurrence quatre, qui contiennent chacun une rangée d'aubes statoriques 26. Les redresseurs sont associés au fan 16 ou à une rangée d'aubes rotoriques pour redresser le flux d'air, de sorte à convertir la vitesse du flux en pression, notamment en pression statique.

Les aubes statoriques 26 s'étendent essentiellement radialement depuis un carter extérieur 27, et peuvent y être fixées et immobilisées à l'aide d'axes. Elles supportent des viroles intérieures 28 recouvertes de couches de matériau abradable qui assurent l'étanchéité avec le rotor 12. En raison de la rotation de la soufflante 16 juste en amont des aubes statoriques 26 en entrée du compresseur, c'est-à-dire en entrée du bec de séparation 22, le flux primaire 18 présente des turbulences. Le flux primaire 18 présente des pics de pressions qui tournent dans le sillage des pales de soufflante 16. En corolaire, les turbulences présentent des diminutions de pression, par exemple des tourbillons, se propageant dans le sillage des pales de soufflante. Afin d'estimer les turbulences, et en particulier leurs vitesses d'écoulement selon la direction axiale, selon les directions radiale et circonférence, le compresseur 4 comporte au moins un système de mesure de turbulences 30, éventuellement plusieurs systèmes de mesure de turbulences 30. La largeur selon la circonférence d'une aube de soufflante est supérieure ou égale à l'écart entre deux aubes amont, en entrée de compresseur. Cette largeur peut être supérieure ou égale au double ou au triple dudit écart.

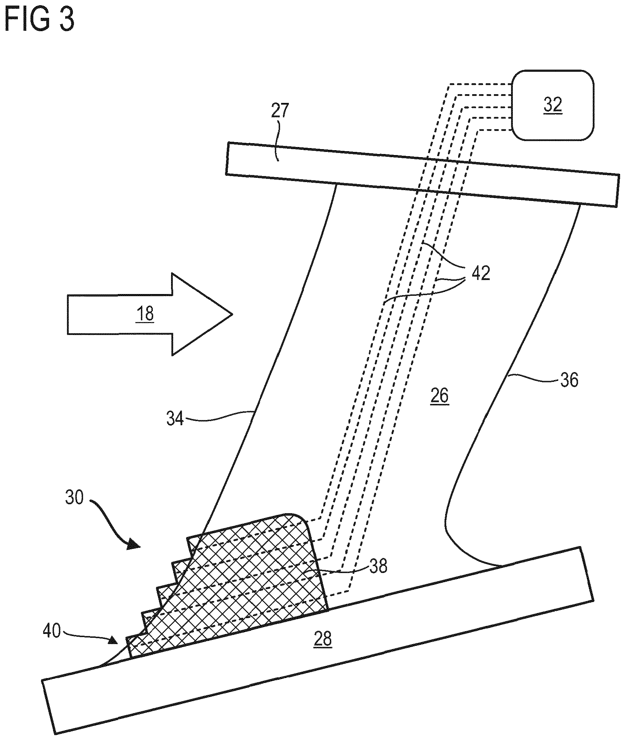

La figure 3 esquisse une portion de la turbomachine extraite de la figure 2. Le système de mesure 30 de turbulence comporte une unité de calcul 32 permettant de calculer les composantes du flux primaire 18. Une aube statorique 26 s'étend radialement jusqu'à la virole interne 28 et depuis le carter externe 27.

L'aube 26 présente un bord d'attaque 34 et un bord de fuite 36 qui délimitent sa surface intrados et sa surface extrados. Le système de mesure 30 peut comprendre un corps 38. Le corps 38 peut être intégré dans l'aube 26, c'est-à-dire qu'il forme la surface intrados et/ou la surface extrados, et/ou que le corps est disposé entre lesdites surfaces ; par exemple à distance.

Le corps 38 peut être solidaire de la virole interne 28 afin d'y mesurer les turbulences et les fluctuations de flux. D'ailleurs les fluctuations peuvent varier selon la fréquence de passage des pales de soufflante. Le corps 38 peut généralement épouser le bord d'attaque 34 de l'aube 26. Il peut en reprendre la courbure et/ou présenter une succession de marches agencées le long du bord d'attaque 34.

La face amont 40 du corps 38 est disposée en face du flux primaire 18. Le corps 38, et donc sa face amont 40 sont intégrés au niveau radialement du pied d'aube 26, par exemple dans les premiers 25% ou les premiers 10% de l'aube 26, considérés depuis la virole interne 28. Par ailleurs, le corps 38 peut être délimité par la hauteur radiale de la virole interne 28, notamment en raison de l'inclinaison de son profil de révolution.

Afin de permettre les mesures et les calculs, le système 30 comporte une pluralité de capteurs (non visibles) branchés à une unité de calcul 32, qui elle peut être en dehors du carter externe 27. A cet effet, le système 30 peut inclure des câbles 42 traversant radialement l'aube 26. Ces câbles 42 peuvent être agencés dans l'épaisseur de l'aube 26.

L'unité de calcul 32 inclut une mémoire, un module de traitement des données issues des capteurs et un programme d'ordinateur. Grâce à ces moyens, entre autres, le système parvient à calculer chaque composante d'orientation en continu. Le calcul s'effectue plusieurs fois par seconde, par exemple à une fréquence supérieure à la vitesse de passage des pales de soufflante. La fréquence de calcul peut être supérieure ou égale à 50Hz, ou 500Hz, ou 5000Hz, notamment pour chaque composante. Les calculs peuvent être effectué pour différentes positions radiales des capteurs. Une caractérisation de la couche limite peut être obtenue.

Le système 30 est adapté pour mesurer un niveau de perturbation en fonction des variations des composantes d'orientation de la vitesse du flux. Les fréquences et les amplitudes de variation d'au moins une, ou de plusieurs, ou de chaque composante d'orientation est prise en compte.

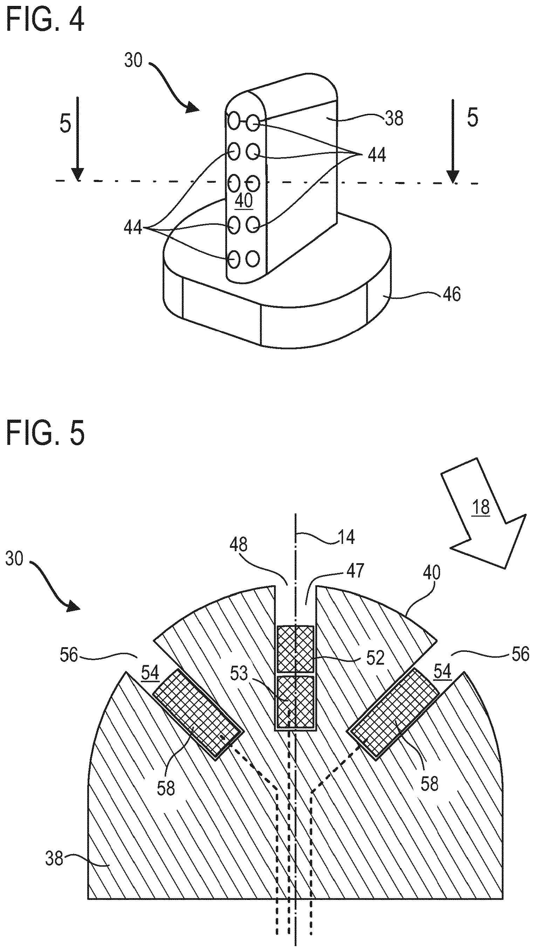

La figure 4 présente une vue isométrique du système de mesure de turbulences 30 d'un flux de la turbomachine, le système étant similaire ou identique à celui décrit en relation avec les figures 2 et/ou 3.

Le corps 38 présente au moins deux logements 44 avec des entrées formées dans la face amont 40. Les logements 44 reçoivent des capteurs électriques, dont au moins un capteur de température et des capteurs de pression. Les logements 44 peuvent être répartis en au moins une colonne ; par exemple radiale, ou en plusieurs colonnes radiales ; éventuellement parallèles. Un agencement en deux ou trois colonnes est envisagé (une colonne étant ici masquée). Les logements 44 peuvent également être agencés en lignes, par exemple selon la circonférence. Les logements 44, et donc leurs entrées, peuvent former un quadrillage sur la face amont 40. D'autres agencements sont envisageables. Le quadrillage peut être hétérogène.

Une platine de fixation 46 peut prolonger le corps 38. Elle en permet la fixation sur la virole.

La figure 5 est une coupe du système de mesure, la coupe étant effectuée selon l'axe 5-5 tracé sur la figure 4, par exemple le long d'une ligne de logements. La présente ligne peut être représentative de l'ensemble des logements du système. Les trois logements peuvent former un jeu, le système peut comprendre plusieurs jeux empilés radialement ; par exemple le long du bord d'attaque d'aube.

Le corps 38 reçoit à ce niveau trois logements avec leurs entrées. Le logement au niveau de l'axe de rotation 14 peut être considéré comme un premier logement 47, son entrée étant une première entrée 48. La première entrée 48 peut être perpendiculaire à l'axe de rotation 14, ou du moins comprendre une droite perpendiculaire audit axe 14. Alternativement ou en complément, la première entrée est perpendiculaire au flux 18. Le premier logement et sa première entrée peuvent mesurer la pression totale, c'est-à-dire l'addition de la pression dynamique et de la pression statique. Le premier logement 47 peut recevoir au moins un premier capteur de pression 52. Optionnellement, le premier logement abrite un capteur de température 53. Le capteur de température peut être en dehors des logements.

En complément, le corps 38 peut recevoir au moins deux logements latéraux 54, également appelés deuxièmes logements 54. Ces deuxièmes logements 54 sont disposés de part et d'autres du premier logement 47. Ils peuvent montrer des deuxièmes entrées 56. Au moins une ou chacune d'elles est inclinée par rapport à la première entrée 47. Les deuxièmes entrées 56 peuvent être inclinées l'une par rapport à l'autre. Eventuellement, la première entrée et deux deuxièmes entrées sont toutes inclinées les unes par rapport aux autres.

Ou encore, le système 30 inclut au moins trois deuxièmes logements dont les entrées sont toutes inclinées les unes par rapport aux autres en plus d'être inclinée par rapport à la première entée 48. La même caractéristique peut déclinée pour quatre, cinq, six, ou au moins dix deuxièmes entrées de deuxièmes logements. Chaque entrée (48 ; 56) comporte un plan général. Les inclinaisons respectives peuvent être mesurées par rapport aux plans généraux. Au moins un ou chaque deuxième logement 54 comporte un deuxième capteur de pression 58. Optionnellement, au moins un ou plusieurs ou chaque deuxième logement 54 reçoit un capteur de température, éventuellement en complément ou en remplacement de celui dans le premier logement 47.

Alternativement ou en complément, le premier logement est face au flux 18 ; et/ou le premier logement présente une inclinaison par rapport à l'axe de rotation 14 qui est égale à l'angle calage des pales de soufflante, ledit angle de calage étant mesuré en extrémité interne de pale. L'angle de calage peut être mesuré sur un profil de pale de soufflante, à l'aide d'un segment reliant le bord d'attaque au bord de fuite de ladite pale. Optionnellement, l'entrée 48 est perpendiculaire à ladite corde.

En orientant la première entrée 48 face aux flux 18, les capteurs de pression permettent de déterminer la pression totale et les angles d'écoulement qui sont également désignés par les termes anglo-saxons « pitch » et « yaw ». Le nombre de Mach peut également être calculé à l'aide de ces mesures de pression, notamment pour chaque entrée.

En complément, la connaissance de la température, dans le premier logement et/ou dans un, ou plusieurs, ou chacun des deuxièmes logements, permet d'obtenir la densité, donc la vitesse du son et finalement la vitesse de l'écoulement, que l'on peut décomposer en ses trois composantes grâce à la connaissance des angles d'écoulement.

Optionnellement, les entrées (48 ; 56) peuvent être formées par des tuyaux (non représentés). Ces tuyaux prolongent les logements en dehors du corps 38. Ils peuvent être perpendiculaires à la surface de la face amont 40. Ainsi, les tuyaux peuvent être inclinés les uns par rapport aux autres.

## Revendications

1. Compresseur (4 ; 6) de turbomachine (2), notamment un compresseur basse pression de turbomachine, comprenant une arrivée d'air pour un flux amont avec une rangée annulaire d'aubes (26) et un système de mesure de turbulences (30) d'un flux (18 ; 20) du compresseur (4 ; 6), le système (30) comprenant :
- un premier logement (47) avec un premier capteur de pression (52) et une première entrée (48),
- un deuxième logement (54) avec un deuxième capteur de pression (58) et une deuxième entrée (56) inclinée par rapport à la première entrée (48),
les entrées (48 ; 56) de logements (44 ; 47 ; 54) étant réunies dans un même tronçon radial d'aube (26) représentant au plus : 30%, ou 10%, ou 5% de la hauteur radiale de l'aube correspondante,
le compresseur comprenant en outre
un capteur de température (53),
le système (30) étant configuré pour calculer, notamment en continu, au moins deux composantes d'orientation de la vitesse du flux (18 ; 20) d'air sur la base des capteurs de pression (52 ; 58) et du capteur de température (53).

2. Compresseur (4 ; 6) selon la revendication 1, **caractérisé en ce que** les au moins deux composantes d'orientation de la vitesse de l'écoulement comprennent une composante axiale, et/ou une composante radiale, et/ou une composante circonférentielle.

3. Compresseur (4 ; 6) selon l'une des revendications 1 à 2, **caractérisé en ce que** le premier logement (47), le premier capteur (52) et la première entrée (48) sont configurés pour pouvoir mesurer la pression totale du flux (18 ; 20).

4. Compresseur (4 ; 6) selon l'une des revendications 1 à 3, **caractérisé en ce que** le deuxième logement (54), le deuxième capteur (58) et la deuxième entrée (56) sont configurés pour pouvoir mesurer la pression statique du flux (18 ; 20).

5. Compresseur (4 ; 6) selon l'une des revendications 1 à 4, **caractérisé en ce qu'**il comprend en outre un troisième logement avec un troisième capteur de pression et une troisième entrée, les entrées étant toutes inclinées les unes par rapport aux autres.

6. Compresseur (4 ; 6) selon l'une des revendications 1 à 5, **caractérisé en ce que** les entrées (48 ; 56) comprennent des tubes, lesdits tubes étant inclinés l'un par rapport à l'autre ou les uns par rapport aux autres.

7. Compresseur (4 ; 6) selon l'une des revendications 1 à 6, **caractérisé en ce qu'**il comprend en outre une pluralité de deuxièmes logements (54), chacun avec un deuxième capteur de pression (58) et une deuxième entrée (56), chaque entrée étant inclinée par rapport aux autres entrées, les deuxièmes logements (54) étant préférentiellement répartis autour du premier logement (47).

8. Compresseur (4 ; 6) selon l'une des revendications 1 à 7, **caractérisé en ce qu'**il comprend en outre un corps monobloc (38) dans lequel sont formés les logements (44 ; 47 ; 54) et les entrées (48 ; 56), et dans lequel les capteurs sont logés.

9. Compresseur (4 ; 6) selon l'une des revendications 1 à 8, **caractérisé en ce que** les logements (44 ; 47 ; 54) sont borgnes et/ou séparés les uns des autres de manière étanche, notamment par le corps (38).

10. Compresseur (4 ; 6) selon l'une des revendications 1 à 9, **caractérisé en ce qu'**il est configuré pour mesurer un niveau de perturbation en fonction des variations des composantes d'orientation de la vitesse du flux (18 ; 20).

11. Compresseur (4 ; 6) selon l'une des revendications 1 à 10, **caractérisé en ce que** les capteurs de pression (52 ; 58) sont des capteurs électriques, et/ou le capteur de température (53) est un capteur électrique.

12. Compresseur (4 ; 6) selon l'une des revendications 1 à 11, **caractérisé en ce que** les aubes (26) comprennent des bords d'attaque (34), les entrées (48 ; 56) des logements (44 ; 47 ; 54) étant disposées axialement au niveau des bords d'attaque (34).

13. Compresseur (4 ; 6) selon la revendication 12, **caractérisé en ce que** les entrées (48 ; 56) des logements (44 ; 47 ; 54) sont réparties radialement le long d'un même bord d'attaque (34) d'aube (26) afin d'y mesurer les au moins deux composantes de vitesse d'écoulement.

14. Compresseur (4 ; 6) selon l'une des revendications 11 à 13, **caractérisé en ce qu'**il comprend une virole interne (28) liée aux aubes (26), les entrées (48 ; 56) de logements (44 ; 47 ; 54) étant disposées radialement à hauteur de la virole (28).

15. Turbomachine (2), notamment un turboréacteur, comprenant un compresseur, **caractérisée en ce que** le compresseur est conforme à l'une des revendications 1 à 14, la turbomachine comprenant une soufflante (16) en regard axialement de chaque ou de plusieurs ou d'au moins une entrée (48 ; 56) de logement (44 ; 47 ; 54).

## Patentansprüche

1. Verdichter (4; 6) für eine Turbomaschine (2), insbesondere ein Niederdruckverdichter für eine Turbomaschine umfassend einen Lufteinlass für eine stromaufwärts gerichtete Strömung mit einer ringförmigen Schaufelreihe (26) und einem System (30) zur Messung der Turbulenz einer Strömung (18; 20) des Verdichters (4; 6), wobei das System (30) umfasst:
- ein erstes Gehäuse (47) mit einem ersten Drucksensor (52) und einem ersten Einlass (48)
- ein zweites Gehäuse (54) mit einem zweiten Drucksensor (58) und einen zweiten Einlass (56), der in Bezug auf den ersten Einlass (48) geneigt ist, wobei
wobei die Einlässe (48; 56) der Gehäuse (44; 47; 54) in einem einzigen radialen Abschnitt der Schaufel (26) zusammengefasst sind, der höchstens: 30%, oder 10%, oder 5% der radialen Höhe der entsprechenden Schaufel darstellt,
der Verdichter des Weiteren
einen Temperatursensor (53) umfasst,
wobei das System konfiguriert ist, vor allem fortlaufend, mindestens zwei Orientierungskomponenten der Geschwindigkeit des Luftstroms (18; 20) auf der Basis der Drucksensoren (52; 58) und der Drucksensortemperatur (53) zu berechnen.

2. Verdichter (4; 6) nach Anspruch 1, **dadurch gekennzeichnet, dass** die mindestens zwei Orientierungskomponenten der Strömungsgeschwindigkeit eine axiale Komponente und/oder eine radiale Komponente und/oder eine Umfangskomponente umfassen.

3. Verdichter (4; 6) nach einem der Ansprüche 1 bis 2, **dadurch gekennzeichnet, dass** das erste Gehäuse (47), der erste Sensor (52) und der erste Einlass (48) konfiguriert sind, den Gesamtdruck der Strömung (18; 20) messen zu können.

4. Verdichter (4; 6) nach einem der Ansprüche 1 bis 3, **dadurch gekennzeichnet, dass** das zweite Gehäuse (54), der zweite Sensor (58) und der zweite Einlass (56) konfiguriert sind, den statischen Druck der Strömung (18; 20) messen zu können.

5. Verdichter (4; 6) nach einem der Ansprüche 1 bis 4, **dadurch gekennzeichnet, dass** er ferner ein drittes Gehäuse mit einem dritten Drucksensor und einem dritten Einlass umfasst, wobei die Einlässe alle zueinander geneigt sind.

6. Verdichter (4; 6) nach einem der Ansprüche 1 bis 5, **dadurch gekennzeichnet, dass** die Einlässe (48; 56) aus Rohren bestehen, wobei die Rohre relativ zueinander oder gegeneinander geneigt sind.

7. Verdichter (4; 6) nach einem der Ansprüche 1 bis 6, **dadurch gekennzeichnet, dass** er ferner mehrere zweite Gehäuse (54) mit jeweils einem zweiten Drucksensor (58) und einem zweiten Einlass (56) umfasst, wobei jeder Einlass relativ zu den anderen Einlässen geneigt ist, wobei die zweiten Gehäuse (54) vorzugsweise um das erste Gehäuse (47) verteilt.

8. Verdichter (4; 6) nach einem der Ansprüche 1 bis 7, **dadurch gekennzeichnet, dass** er ferner einen einstückigen Körper (38) umfasst, in dem die Gehäuse (44; 47; 54) und die Einlässe (48; 56) gebildet sind und in dem die Sensoren untergebracht sind.

9. Verdichter (4; 6) nach einem der Ansprüche 1 bis 8, **dadurch gekennzeichnet, dass** die Gehäuse (44; 47; 54), insbesondere durch den Körper (38), blind und/oder abgedichtet voneinander getrennt sind.

10. Verdichter (4; 6) nach einem der Ansprüche 1 bis 9, **dadurch gekennzeichnet, dass** er konfiguriert ist, ein Störungsniveau als Funktion der Variationen der Orientierungskomponenten der Strömungsgeschwindigkeit (18; 20) zu messen.

11. Verdichter (4; 6) nach einem der Ansprüche 1 bis 10, **dadurch gekennzeichnet, dass** die Drucksensoren (52; 58) elektrische Sensoren sind und/oder der Temperatursensor (53) ein elektrischer Sensor ist.

12. Verdichter (4; 6) nach einem der Ansprüche 1 bis 11, **dadurch gekennzeichnet, dass** die Leitschaufeln (26) Anströmkanten (34) aufweisen, wobei die Einlässe (48; 56) der Gehäuse (44; 47; 54) axial auf Höhe der Anströmkanten (34) angeordnet sind.

13. Verdichter (4; 6) nach einem der Ansprüche 1 bis 12, **dadurch gekennzeichnet, dass** die Einlässe (48; 56) der Gehäuse (44; 47; 54) radial entlang derselben Anströmkante (34) der Schaufel (26) verteilt sind, um die mindestens zwei Strömungsgeschwindigkeitskomponenten zu messen.

14. Verdichter (4; 6) nach einem der Ansprüche 1 bis 11, **dadurch gekennzeichnet, dass** er einen inneren Mantel (28) umfasst, der mit den Leitschaufeln (26) verbunden ist, wobei die Einlässe (48; 56) der Gehäuse (44; 47; 54) radial auf der Höhe des Mantels (28) angeordnet sind.

15. Turbomaschine (2), insbesondere ein Turbojet, einen Verdichter umfassend, **dadurch gekennzeichnet, dass** der Verdichter einem der Ansprüche 1 bis 14 entspricht, wobei die Turbomaschine ein Gebläse (16) umfasst, das jedem oder mehreren oder mindestens einem Einlass (48; 56) des Gehäuses (44; 47; 54) axial zugewandt ist.

## Claims

1. Compressor (4, 6) of a turbine engine (2), in particular a low-pressure turbomachine compressor, comprising an upstream air intake for an upstream flow with an annular row of vanes (26) and a system for measuring turbulences (30) of a flow (18, 20) of the compressor (4, 6), the system (30) comprising:
- a first housing (47) with a first pressure sensor (52) and a first inlet (48),
- a second housing (54) with a second pressure sensor (58) and a second inlet (56) inclined relative to the first inlet (48),
the inlets (48, 56) of the housings (44, 47, 54) being joined together in the same radial vane (26) section representing at most: 30%, or 10%, or 5% of the radial height of the corresponding vane,
the compressor further comprising
a temperature sensor (53),
the system (30) being configured to calculate, in particular continuously, at least two orientation components of the velocity of the air flow (18, 20) on the basis of the pressure sensors (52, 58) and the temperature sensor (53).

2. Compressor (4, 6) according to claim 1, **characterized in that** the at least two orientation components of the velocity of the flow comprise an axial component, and/or a radial component, and/or a circumferential component.

3. Compressor (4, 6) according to any of claims 1 and 2, **characterized in that** the first housing (47), the first sensor (52) and the first inlet (48) are configured to measure the total pressure of the flow (18, 20).

4. Compressor (4, 6) according to any one of claims 1 to 3, **characterized in that** the second housing (54), the second sensor (58) and the second inlet (56) are configured to measure the static pressure of the flow (18, 20).

5. Compressor (4, 6) according to any one of claims 1 to 4, **characterized in that** it further comprises a third housing with a third pressure sensor and a third inlet, the inlets being inclined relative to each other.

6. Compressor (4, 6) according to any one of claims 1 to 5, **characterized in that** the inlets (48, 56) comprise tubes, said tubes being inclined relative to one another.

7. Compressor (4, 6) according to any one of claims 1 to 6, **characterized in that** it further comprises a plurality of second housings (54), each with a second pressure sensor (58) and a second inlet (56), each inlet being inclined relative to the other inlets, the second housings (54) being preferentially arranged around the first housing (47).

8. Compressor (4, 6) according to any one of claims 1 to 7, **characterized in that** it further comprises a one-piece body (38) in which the housings (44, 47, 54) and the inlets (48, 56) are formed, and in which the sensors are received.

9. Compressor (4, 6) according to any one of claims 1 to 8, **characterized in that** the housings (44, 47, 54) are blind and/or separated from one another in a sealed manner, in particular by the body (38).

10. Compressor (4, 6) according to any one of claims 1 to 9, **characterized in that** it is configured to measure a level of disturbance as a function of the variations of the orientation components of the velocity of the flow (18, 20).

11. Compressor (4, 6) according to any one of claims 1 to 10, **characterized in that** the pressure sensors (52, 58) are electric sensors, and/or the temperature sensor (53) is an electric sensor.

12. Compressor (4, 6) according to any one of claims 1 to 11, **characterized in that** the vanes (26) have leading edges (34), the inlets (48, 56) of the housings (44, 47, 54) being disposed axially at the level of the leading edges (34).

13. Compressor (4, 6) according to claim 12, **characterized in that** the inlets (48, 56) of the housings (44, 47, 54) are arranged radially along the same leading edge (34) of a vane (26) in order to measure there the at least two flow speed components.

14. Compressor (4, 6) according to any one of claims 11 to 13, **characterized in that** it comprises an internal shell (28) connected to the vanes (26), the inlets (48, 56) of the housings (44, 47, 54) being disposed radially at the height of the shell (28).

15. Turbine engine (2), in particular a turbojet, comprising a compressor, **characterized in that** the compressor is in accordance to any one of the claims 1 to 14, the turbine engine comprising a fan (16) axially facing each or more or at least one inlet (48, 56) of a housing (44, 47, 54).
